# FASCICULE DE BREVET EUROPEEN

(11) **EP 0 775 272 B1**
(45) Date de publication et mention de la délivrance du brevet: **11.11.1998**
(21) Numéro de dépôt: 95927792.2
(22) Date de dépôt: 17.08.1995
(51) Int. Cl.: F16H 63/30, F16H 61/02

(54) **DISPOSITIF DE TRANSMISSION, EN PARTICULIER POUR VEHICULE, ET PROCEDE DE PILOTAGE S'Y RAPPORTANT**
GETRIEBE, INSBESONDERE FÜR EIN FAHRZEUG, UND ZUGEHÖRIGES STEUERUNGSSYSTEM
TRANSMISSION DEVICE, IN PARTICULAR, FOR VEHICLES AND RELATED METHOD FOR CONTROLLING TRANSMISSION

(30) Priorité: 18.08.1994 FR 9410109
(43) Date de publication de la demande: 28.05.1997
(73) Titulaire: ANTONOV AUTOMOTIVE TECHNOLOGIES B.V., 3012 NJ Rotterdam (NL)
(72) Inventeur: ANTONOV, Roumen, F-75008 Paris (FR)
(74) Mandataire: Pontet, Bernard
(86) Numéro de dépôt international: FR9501091
(87) Numéro de publication internationale: WO9606293

(56) Documents cités:
- EP-A- 0 149 012
- WO-A-91/13275
- WO-A-92/07206
- WO-A-93/08411
- US-A- 4 713 984

## Description

La présente invention concerne un dispositif de transmission automatique à au moins deux rapports, en particulier pour véhicule.

La présente invention concerne également un procédé pour piloter un tel dispositif de transmission.

On connaît d'après le WO-A-9207206 une transmission automatique dans laquelle un embrayage relie sélectivement deux organes rotatifs d'un engrenage différentiel tel qu'un train épicycloïdal selon que l'une ou l'autre de deux forces antagonistes domine. Il s'agit par exemple d'une poussée axiale produite par une denture hélicoïdale montée mobile axialement, tendant à desserrer l'embrayage à l'encontre de ressorts et/ou d'une force produite par un moyen tachymétrique centrifuge, tendant à serrer l'embrayage. Lorsque l'embrayage est desserré, il faut empêcher la rotation d'un troisième organe rotatif de l'engrenage différentiel, et cela peut être assuré par une roue libre empêchant ce troisième organe de tourner en inverse.

Ce type de transmission est très avantageux car son fonctionnement de base ne nécessite ni source de puissance extérieure, ni capteurs, ni circuit de pilotage. C'est le dispositif de transmission lui-même qui produit les forces qui vont le piloter et ces forces sont en même temps une mesure des paramètres nécessaires au pilotage.

Cependant, un tel dispositif de transmission n'est pas directement capable d'optimiser le fonctionnement en retenue, c'est à dire lorsqu'on relâche la pédale d'accélérateur pour que le moteur assure un certain freinage du véhicule. Dans ce cas, le couple résistant du moteur ne dépend plus que de sa vitesse de rotation et n'est donc pas indicatif de la décélération souhaitée par le conducteur. En outre, dans le cas où le couple est détecté par une réaction de denture hélicoïdale, cette réaction change de sens lors du fonctionnement en retenue et elle ne tend donc plus à desserrer l'embrayage. De plus encore, dans le cas de la structure à roue libre, même si la réaction de denture était capable de desserrer l'embrayage pour créer ainsi l'une des conditions du fonctionnement en réducteur, une autre condition demeurerait non satisfaite : pendant le fonctionnement en retenue, le troisième organe rotatif de l'engrenage différentiel tend à tourner non pas en inverse, mais à grande vitesse dans le sens normal, ce que la roue libre ne peut pas empêcher.

La demande de brevet maintenant publiée sous le n°WO94/19629 expose comment on peut ajouter sélectivement une sollicitation supplémentaire pour permettre le fonctionnement en retenue et aussi pour faire fonctionner le dispositif de transmission, dans certains autres cas, selon un rapport de transmission différent de celui qui résulterait de la comparaison entre les deux forces antagonistes de base. On peut ainsi par exemple faire fonctionner le dispositif de transmission selon son rapport le plus bas lorsque le conducteur du véhicule appuie à fond sur la pédale d'accélérateur, même à des vitesses où, par exemple, la force centrifuge, qui augmente comme le carré de la vitesse, imposerait normalement le fonctionnement selon le rapport le plus élevé.

Il est apparu des problèmes de choc lors des changements de rapport. Par exemple, un tel choc se produit si par hasard le conducteur relâche la pédale d'accélérateur au moment où la force centrifuge est en train de faire passer le dispositif de transmission du rapport inférieur au rapport supérieur. Dans ce cas, la suprématie naissante de la force centrifuge se trouve brusquement augmentée, et le passage du dispositif d'accouplement à l'état accouplé peut être brutal. Il peut en aller de même lorsque le processus de pilotage fait varier, par exemple fait disparaître, la sollicitation supplémentaire.

On connaît d'après le US-A-4 713 984 un dispositif de transmission dans lequel les embrayages sont pilotés non pas par des forces dont l'une au moins serait la mesure d'un paramètre de fonctionnement, mais par de simples actionneurs hydrauliques commandés par les moyens décisionnels de la transmission. Des moyens sont prévus pour éviter les chocs en restreignant les débits d'huile lors de la mise en pression et lors de la purge des chambres hydrauliques.

Selon le EP-A-0 149 012, dans une configuration semblable, la section de passage de l'huile varie en fonction de la vitesse du véhicule.

Le but de la présente invention est de proposer un dispositif de transmission du type dans lequel un moyen d'accouplement sélectif est commandé par des forces antagonistes variables, et dans lequel les chocs lors des changements de rapport de transmission soient évités.

Suivant l'invention, le dispositif de transmission comprenant une combinaison de dentures interengrenées et un moyen d'accouplement par friction dans lequel un organe mobile de serrage est attaqué par des moyens de sollicitation antagonistes, l'un au moins des moyens de sollicitation antagonistes appliquant à l'organe mobile de serrage une force qui est une mesure d'un paramètre de fonctionnement pertinent pour la sélection automatique du rapport de transmission, la combinaison de dentures réalisant deux rapports de transmission différents selon que le moyen d'accouplement par friction est dans un état accouplé ou dans un état désaccouplé, est caractérisé par des moyens d'amortissement montés pour freiner certains au moins des mouvements de l'organe mobile de serrage entre les états accouplé et désaccouplé du moyen d'accouplement par friction.

Les moyens d'amortissement, en freinant l'organe mobile de serrage, empêchent les chocs de se produire, notamment dans les cas évoqués ci-dessus.

De préférence, les moyens de sollicitation antagonistes comprennent des moyens de sollicitation modulable qui introduisent dans le dispositif de transmission une force qui simule un accroissement ou une réapparition de l'une des forces antagonistes pilotant normalement le dispositif, de manière à davantage favoriser le fonctionnement du dispositif selon l'un des rapports de transmission par rapport au cas du pilotage automatique par les moyens de sollicitation antagonistes de base seuls.

Si le moyen de sollicitation modulable comprend un vérin hydraulique, les moyens d'amortissement peuvent comprendre une perte de charge dans un trajet de purge d'une chambre de pression du vérin, de façon que quand la pression est supprimée ou réduite dans le vérin pour ramener la sollicitation modulable à une valeur nulle ou réduite, l'organe mobile de serrage ne puisse se déplacer qu'à vitesse réduite dans le sens provoquant la purge de la chambre de pression du vérin.

Suivant un autre aspect de l'invention, le procédé pour piloter un dispositif de transmission comprenant une combinaison de dentures interengrenées et un moyen d'accouplement par friction qui fait fonctionner la combinaison de dentures selon l'un ou l'autre de deux rapports de transmission, suivant que le moyen d'accouplement par friction est à l'état accouplé ou à l'état désaccouplé, procédé dans lequel on soumet un organe mobile de serrage du dispositif d'accouplement par friction à deux forces antagonistes de base dont l'une, à chaque changement d'état du dispositif d'accouplement par friction, varie dans le sens stabilisant le nouvel état, l'un au moins des moyens de sollicitation antagonistes appliquant à l'organe mobile de serrage une force qui est une mesure d'un paramètre de fonctionnement pertinent pour la sélection automatique du rapport de transmission, est caractérisé en ce que:
- on soumet en outre l'organe mobile de serrage à une sollicitation modulable, de manière à favoriser sélectivement l'apparition de l'un des deux états;
- on freine au moins un sens de mouvement de l'organe de serrage.

La sollicitation modulable peut avoir une valeur relativement modérée, car elle n'est qu'une sorte d'appoint, et on peut donc la produire avec une consommation d'énergie relativement faible. En freinant au moins un sens de mouvement de l'organe de serrage, par exemple le sens correspondant à la disparition de la sollicitation modulable, on évite les chocs et à coups.

Suivant un aspect avantageux de l'invention, lorsque la ou les forces antagonistes de base que la sollicitation modulable doit vaincre pour faire changer l'état d'accouplement du moyen d'accouplement par friction varient en fonction d'un paramètre de fonctionnement déterminé, on fait varier l'intensité de la sollicitation modulable dans le même sens en fonction de ce paramètre de fonctionnement.

Ainsi, lorsque les moyens de sollicitation modulables interviennent pour changer l'état du moyen d'accouplement par friction, la force qu'ils produisent n'est que raisonnablement supérieure à la force antagoniste à vaincre. Ceci évite les chocs lors du changement de rapport qui va en résulter, quelle que soit la valeur du paramètre de fonctionnement.

Dans la suite, de manière classique, on dit qu'un rapport de transmission est "court" ou "bas" lorsqu'il correspond à une faible vitesse de la sortie par rapport à la vitesse d'entrée. Dans le cas contraire, le rapport est dit "long" ou "élevé".

D'autres particularités et avantages de l'invention ressortiront encore de la description ci-après, relative à des exemples non-limitatifs.

Aux dessins annexés :
- la figure 1 est une demi-vue en coupe longitudinale schématique d'un dispositif de transmission à deux rapports selon l'invention, au repos ;
- la figure 2 et 3 des vues analogues à la figure 1, mais relatives au fonctionnement en réducteur, et respectivement en prise directe ;
- la figure 4 est en vue d'un organigramme de pilotage du dispositif de transmission des figures 1 à 3 ; et
- la figure 5 est une vue analogue à la figure 3 mais relative à un second mode de réalisation.

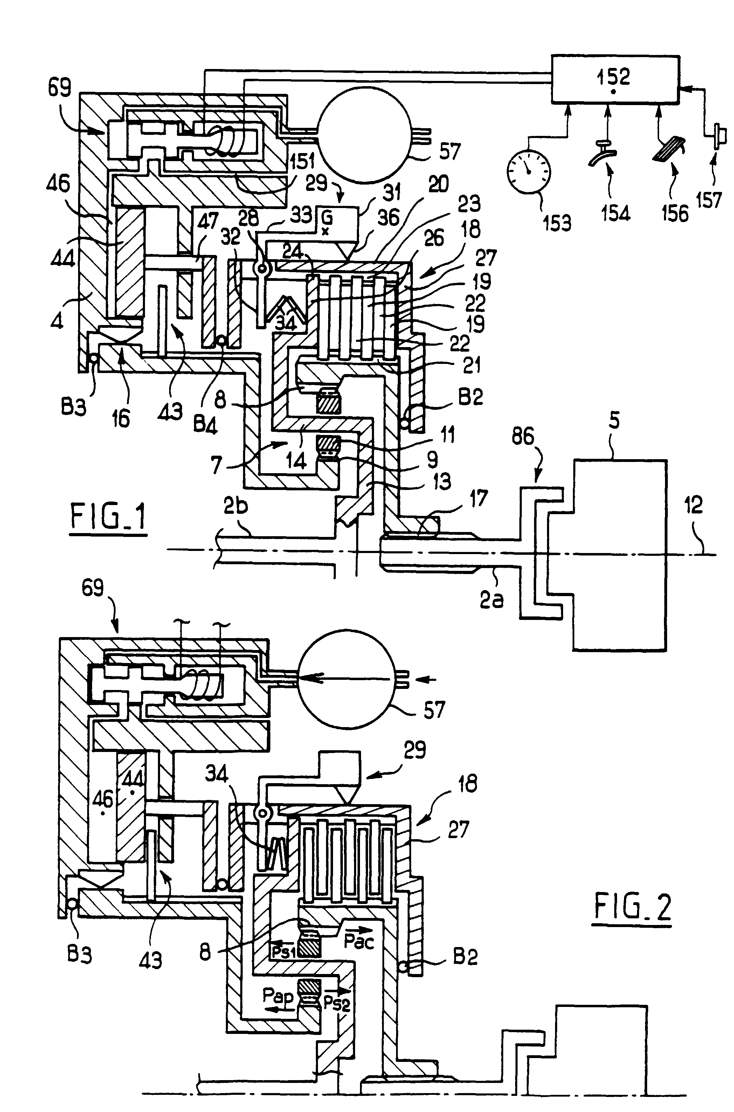

Le dispositif de transmission à deux rapports représenté à la figure 1, destiné en particulier à une automobile, comprend un arbre d'entrée 2a et un arbre de sortie 2b alignés selon l'axe 12 du dispositif. L'arbre d'entrée 2a est relié à l'arbre de sortie d'un moteur 5 de véhicule automobile avec interposition d'un embrayage 86. L'arbre de sortie 2c est destiné à entraîner directement ou indirectement l'entrée d'un différentiel pour l'entraînement des roues motrices d'un véhicule. Entre l'arbre de sortie 2b et l'entrée du différentiel peut par exemple être interposé un autre dispositif de transmission à deux ou plusieurs rapports et/ou un inverseur marche avant - marche arrière à commande manuelle.

Les arbres d'entrée 2a et de sortie 2b sont immobilisés axialement relativement à un carter 4 du dispositif de transmission.

Le dispositif de transmission comprend un engrenage différentiel formé par un train épicycloïdal 7. Le train 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par un porte-satellites 13 relié rigidement à l'arbre de sortie 2b. Les satellites 11 peuvent tourillonner librement autour de tourillons excentrés 14 du porte-satellites 13. La roue planétaire 9 peut tourner librement autour de l'axe 12 du dispositif de transmission par rapport à l'arbre de sortie 2b qu'elle entoure. Toutefois, un dispositif de roue libre 16 empêche la roue planétaire 9 de tourner en inverse, c'est à dire en sens inverse du sens normal de rotation de l'arbre d'entrée 2a, par rapport au carter 4 de la transmission.

La couronne 8 est liée en rotation, mais libre en coulissement axial relativement à l'arbre d'entrée 2a, par l'intermédiaire de cannelures 17.

Un embrayage 18 est disposé autour de la couronne 8. Il comprend un empilement de disques annulaires 19 alternant avec des disques annulaires 22. Les disques 19 sont liés en rotation à la couronne 8 avec possibilité de coulissement axial. Pour cela, les disques 19 ont des dents intérieures engagées dans des cannelures 21 solidaires de la couronne 8. Les disques 22 sont liés en rotation, avec possibilité de coulissement axial, au porte-satellites 13. Pour cela, une cage 20 comporte, sur sa face radialement intérieure, des cannelures 23 dans lesquelles sont engagées de façon axialement coulissante d'une part des dents extérieures des disques 22 et d'autre part des dents extérieures 24 du porte-satellites 13.

L'empilement de disques 19 et 22 peut être serré axialement entre un plateau de retenue 26 solidaire du porte-satellites 13 et un plateau mobile 27 qui appartient à la cage 20.

La cage 20 supporte des masselottes centrifuges 29 disposées en couronne autour de l'embrayage 18.

Les masselottes sont donc liées en rotation à l'arbre de sortie 2b du dispositif de transmission.

Chaque masselotte a un corps massif 31 situé radialement à l'extérieur des disques 19 et 22 et un bec d'actionnement 32 appuyé contre une face extérieure du plateau fixe 26 par l'intermédiaire d'un ressort belleville 34. Le bec 32 est relié au corps massif 31 par un bras coudé 33 articulé à la cage 20 autour d'un axe 28 orienté tangentiellement par rapport à l'axe 12 du dispositif. Le WO-A-91/13275 décrit des dispositions avantageuses pour le montage articulé de telles masselottes. Le centre de gravité G de la masselotte est situé à l'intérieur ou au voisinage du corps massif 31, en une position qui présente par rapport à l'axe 28 un certain écartement mesuré parallèlement à l'axe 12 du dispositif.

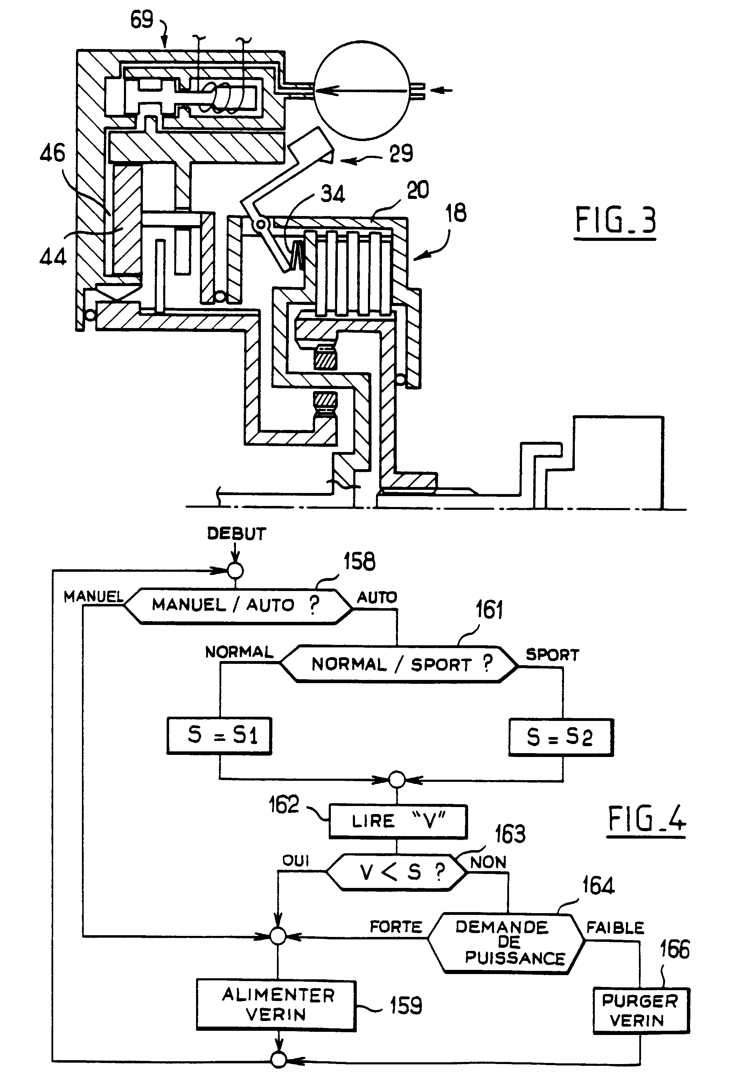

Ainsi, la rotation du porte-satellites 13 tend à faire pivoter radialement vers l'extérieur les corps 31 des masselottes 29 autour de leur axe tangentiel 28 sous l'action de leur force centrifuge Fa, pour les faire passer d'une position de repos définie par une butée 36 contre la cage 20 à une position écartée visible à la figure 3.

Il en résulte alors un déplacement axial relatif entre le bec 32 et l'axe d'articulation 28 de la masselotte, donc entre le bec 32 et la cage 20. Relativement au sens de déplacement correspondant à l'écartement centrifuge des masselottes 29, la cage 20 est appuyée axialement contre la couronne 8, avec liberté de rotation relative, par une butée axiale B2.

Ainsi, le déplacement de la cage 20 par rapport au bec 32 provoque un mouvement de rapprochement relatif entre le bec 32 et le plateau mobile 27 de l'embrayage 18b. Ce déplacement relatif peut correspondre à une compression du ressort belleville 34 et/ou à un déplacement du plateau mobile 27 vers le plateau fixe 26 dans le sens du serrage de l'embrayage 18.

Lorsque le dispositif de transmission est au repos comme représenté à la figure 1, le ressort belleville 34 transmet à la cage 20, par l'intermédiaire des masselottes 29 en butée au repos, une force qui serre l'embrayage 18 de sorte que l'entrée 2a du dispositif de transmission est couplée en rotation avec la sortie 2b et le dispositif de transmission constitue une prise directe capable de transmettre du couple jusqu'à un certain maximum défini par la force de serrage du ressort belleville.

D'autre part, les dentures de la couronne 8, des satellites 11 et de la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2a et au couple sur l'arbre de sortie 2b. Le sens d'inclinaison hélicoïdale des dentures est choisi pour que la poussée axiale Pac (figure 2) prenant naissance dans la couronne 8 lorsqu'elle transmet un couple moteur s'exerce dans le sens où la couronne 8 pousse le plateau mobile 27, par l'intermédiaire de la butée B2. Ainsi, lorsque la poussée axiale Pac existe, la couronne 8 pousse le plateau 27 dans le sens l'écartant du plateau de retenue 26 de l'embrayage 18. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, compte-tenu de son engrènement avec les satellites 11, une poussée axiale Pap qui est égale en intensité et opposée à la poussée axiale Pac de la couronne 8. La poussée Pap de la roue planétaire 9 est transmise au carter 4 par l'intermédiaire d'une butée B3. Ainsi, la poussée axiale Pac s'exerce sur le plateau mobile 27 de l'embrayage et par rapport au carter 4, donc par rapport au plateau de retenue 26 de l'embrayage, et ceci dans le sens tendant à desserrer l'embrayage 18b. Cette force, transmise par la butée B2 à la cage 20, tend aussi à rapprocher l'un de l'autre le bec 32 des masselottes 29 et le plateau de retenue 26, donc à maintenir les masselottes 29 dans leur position de repos et à comprimer le ressort belleville 34.

C'est la situation représentée à la figure 2. En supposant cette situation réalisée, on va maintenant décrire le fonctionnement de base du dispositif de transmission. Tant que le couple transmis au module par l'arbre d'entrée 2a est tel que la poussée axiale Pac dans la couronne 8 suffit pour comprimer le ressort belleville 34 et maintenir les masselottes 29 dans la position de repos représentée à la figure 2, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2a, et il tend à être immobilisé par la charge que doit entraîner l'arbre de sortie 2b. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2a. Le module fonctionne donc en réducteur. Si la vitesse de rotation augmente et que le couple reste inchangé, il arrive un instant où la force centrifuge des masselottes 29 produit entre le plateau de retenue 26 et le plateau mobile 27 une force axiale de serrage plus grande que la poussée axiale Pac, et le plateau mobile 27 est poussé vers le plateau 26 pour réaliser la prise directe.

Lorsque l'embrayage 18 est serré, toute la puissance est transmise directement de la couronne 8 liée à l'arbre d'entrée 2a, au porte-satellites 13 lié à l'arbre de sortie 2b. Par conséquent, les dentures du train épicycloïdal 7 ne travaillent plus, c'est à dire qu'elles ne transmettent plus aucune force et elles ne donnent donc naissance à aucune poussée axiale. Ainsi, la poussée axiale due à la force centrifuge peut s'exercer pleinement pour serrer les plateaux 26 et 27 l'un vers l'autre. On comprend alors mieux le processus de passage en prise directe : dès que les disques 19 et 22 commencent à frotter les uns contre les autres et transmettent une partie de la puissance, les dentures sont déchargées d'autant, la poussée axiale Pac diminue d'autant, et la suprématie de la force centrifuge se confirme de plus en plus jusqu'à ce que l'embrayage 18 assure totalement la prise directe.

Il peut alors arriver que la vitesse de rotation de l'arbre de sortie 2b diminue, et/ou que le couple à transmettre augmente, au point que les masselottes 29 n'assurent plus dans l'embrayage 18 une force de serrage suffisante pour transmettre le couple. Dans ce cas, l'embrayage 18 commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le dispositif de transmission fonctionne ensuite en réducteur. Ainsi, chaque fois qu'un changement entre le fonctionnement en réducteur et le fonctionnement en prise directe s'opère, la force axiale Pac varie dans le sens qui stabilise le rapport de transmission nouvellement institué. Ceci est très avantageux d'une part pour éviter les changements de rapport incessants autour de certains points de fonctionnement critiques, et d'autre part pour que les situations de patinage de l'embrayage 18 ne soient que transitoires.

En serrant l'embrayage lorsque la transmission est au repos, le ressort belleville 34 réalise un couplage mécanique entre l'entrée et la sortie du dispositif de transmission. Ainsi, le véhicule à l'arrêt est retenu par le moteur lorsque celui-ci est lui-même à l'arrêt. Si l'embrayage 18 était desserré au repos, le véhicule ne serait pas empêché de rouler librement en marche avant car dans ce cas l'immobilisation de la couronne 8 par le moteur 5 ferait tourner la roue planétaire 9 en sens normal, ce que la roue libre 16 n'empêche pas.

On va maintenant décrire en référence à la figure 1 des moyens complémentaires prévus pour faire sélectivement fonctionner le dispositif de transmission en réducteur dans des conditions différentes de celles déterminées par les forces axiales du ressort belleville 34, des masselottes centrifuges 29 et de denture de la couronne 8.

Pour cela, le dispositif de transmission comprend un frein 43 qui permet d'immobiliser la roue planétaire 9 relativement au carter 4 indépendamment de la roue libre 16. En d'autre termes, le frein 43 est monté fonctionnellement en parallèle avec la roue libre 16 entre la roue planétaire 9 et le carter 4. Un piston hydraulique 44 est monté axialement coulissant pour sélectivement serrer et desserrer le frein 43. Le frein 43 et le piston 44 ont une forme annulaire ayant pour axe l'axe 12 du dispositif de la transmission. Le piston 44 est adjacent à une chambre hydraulique 46 qui peut être sélectivement alimentée en huile sous pression pour solliciter le piston 44 dans le sens du serrage du frein 43.

De plus, le piston 44 est relié rigidement à un poussoir 47 qui peut s'appuyer contre la cage 20 au moyen d'une butée axiale B₄. Le montage est tel que lorsque la pression régnant dans la chambre 46 pousse le piston 44 dans la position de serrage du frein 43, la cage 20, avant que le frein 43 ne soit serré, est repoussée de manière suffisante pour que l'embrayage 18 soit relâché.

Ainsi, lorsque le piston 44 est dans la position de serrage du frein (figure 2), la roue planétaire 9 est immobilisée même si le porte-satellites 13 tend à tourner plus vite que la couronne 8, comme c'est le cas lors du fonctionnement en retenue, et par conséquent le module fonctionne en réducteur, comme le permet le desserrage de l'embrayage 18.

L'ensemble 43, 44, 46, 47 qui vient d'être décrit constitue donc un moyen qui peut être mis à la disposition du conducteur du véhicule pour obliger le module à fonctionner en réducteur lorsqu'il souhaite augmenter l'effet de frein moteur, par exemple en descente, ou lorsqu'il souhaite augmenter le couple moteur sur l'arbre de sortie 2b. Lorsque le couple est moteur, le frein 43 s'il est serré, exerce une action redondante avec celle de la roue libre 16, mais cela n'est pas gênant.

L'alimentation et la purge de la chambre 46 sont commandées par une électrovanne 69. Lorsqu'elle est au repos, électrovanne 69 (figures 1 et 3) relie la chambre 46 avec un trajet de fuite 151 qui est hydrauliquement résistant. Lorsque l'électrovanne 69 est alimentée électriquement (figure 2), elle isole la chambre 46 du trajet de fuite 151 et la relie avec la sortie d'une pompe 57 entraînée par le moteur 5. Indépendamment de l'état de l'électrovanne 69, la pompe 57 peut également servir à alimenter un circuit de lubrification (non représenté) du dispositif de transmission.

L'électrovanne 69 est pilotée par une unité de pilotage 152 reliée à un détecteur de la vitesse du véhicule 153 (ou de la vitesse de l'arbre de sortie 2b), un détecteur de position d'un sélecteur "manuel/automatique" 154 mis à la disposition du conducteur, un détecteur de la position de la pédale d'accélérateur 156, et un sélecteur "normal/sport" 157 permettant au conducteur de choisir entre deux comportements automatiques différents du dispositif de transmission.

On a vu plus haut que les ressorts belleville 34 placent le dispositif de transmission en prise directe lorsque le véhicule est à l'arrêt. Au démarrage, il faudrait donc que l'apparition de la force de denture Pac fasse passer le dispositif de transmission au fonctionnement en réducteur pour que le démarrage s'effectue ensuite sous le rapport le plus court. Ceci peut créer systématiquement une secousse désagréable. Pour éviter cela, il est prévu que l'ensemble frein 43 piston 44 et poussoir 47 place le dispositif de transmission dans son état "réducteur" lorsque le moteur tourne (pompe 57 en action) mais que la vitesse de l'arbre de sortie 2b détectée par le détecteur 153, est inférieure à un certain seuil "S" que l'on explicitera plus loin. Ainsi le dispositif de transmission opère en réducteur dès le début de la mise en mouvement de l'arbre de sortie 2b et tant que la vitesse de l'arbre de sortie n'a pas dépassé le seuil "S".

Le sélecteur de comportement 157 permet au conducteur de modifier le seuil S. Si le conducteur choisit le comportement "normal", le seuil S est bas, et correspond par exemple à une vitesse de 2500 t/mn pour le moteur 5 lorsque le dispositif de transmission fonctionne en réducteur.

Dès que ce seuil est franchi, la vanne 69 se met en position de purge du vérin 44, 46 et le dispositif de transmission est autorisé à passer au fonctionnement en prise directe si la force axiale générée par les masselottes ou par le ressort 34 est capable de surmonter la force de denture Pac, dirigée en sens contraire. Si le conducteur choisit le comportement "sport" le seuil S est relevé pour correspondre par exemple à 3500 t/mn pour le moteur 5 lorsque le dispositif de transmission fonctionne en réducteur.

Après que le seuil S a été dépassé, la chambre hydraulique 46 n'est pas purgée tant que le dispositif de transmission fonctionne en réducteur car rien ne repousse le piston 44. Lorsque la force des masselottes commence à surmonter la force de denture, les masselottes se soulèvent et déplacent la cage 20 dans le sens repoussant le piston 44 par l'intermédiaire de la butée B4. Ceci purge la chambre 46 à travers le trajet hydrauliquement résistant 151, et il en résulte sur le piston 44 une force de freinage ou d'amortissement qui est transmise à la cage 20. Par conséquent, les masselottes 29 sont empêchées de serrer brutalement l'embrayage 18.

Lorsque le détecteur 156 détecte que la pédale d'accélérateur est enfoncée au maximum, l'unité de commande 152 active la vanne 69 pour que la chambre 46 soit alimentée et provoque le fonctionnement en réducteur.

Le sélecteur "manuel/auto" 154 permet au conducteur de choisir entre le fonctionnement automatique qui vient d'être décrit, et un fonctionnement en réducteur. Dans ce dernier cas, l'unité de commande 152 provoque l'alimentation permanente de la chambre 46.

La figure 4 représente l'organigramme mis en oeuvre par l'unité de commande 152. Un test 158 détermine l'état du sélecteur "manuel/auto" 154. Si le détecteur 154 est en position "manuel" un ordre 159 d'alimenter le vérin 44, 46 est directement émis. Si le sélecteur 154 est en position "auto", un test 161 détermine l'état du sélecteur de comportement 157 et donne au seuil S une valeur S1 ou S2 en fonction du résultat de cette comparaison. Ensuite, la vitesse "V" du véhicule est lue (étape 162) grâce au détecteur 153, puis comparée au seuil S dans un test 163. Si la vitesse V est inférieure au seuil S, l'instruction 159 d'alimenter le vérin est émise. Sinon, un test 164 ordonne d'autoriser la purge du vérin (instruction 166), sauf si le détecteur de position de la pédale d'accélérateur 156 indique une forte demande de puissance de la part du conducteur, auquel cas l'instruction 159 d'alimenter le vérin est émise.

Ainsi, dans quasiment tous les cas où le dispositif de transmission passe du fonctionnement en réducteur au fonctionnement en prise directe, que ce soit après un démarrage à partir de la vitesse nulle ou un redémarrage à partir d'une basse vitesse, ou lorsque le conducteur relâche la pédale d'accélérateur après avoir fortement enfoncé celle-ci, ou encore lorsqu'il fait passer le sélecteur 154 de la position "manuel" à la position "auto", ou le sélecteur 157 de la position "sport" à la position "normal", dans tous ces cas la chambre 46 est chargée de fluide hydraulique et doit donc être purgée, avec l'effet de freinage déjà décrit, pour que le plateau mobile 27 puisse serrer l'embrayage 18. Ceci est particulièrement avantageux dans les cas où la force du piston 44 était déterminante pour le maintien du fonctionnement en réducteur : dans ces cas en effet, la disparition soudaine de la force du piston 44 risque de créer un serrage brutal de l'embrayage 18. L'amortissement dû à la purge difficile de la chambre 46 empêche, justement dans tous ces cas-là, l'embrayage 18 de se serrer brutalement.

Quand la vitesse du véhicule décroît même si le conducteur relâche la pédale d'accélérateur, le dispositif de transmission passe au fonctionnement en réducteur lorsque le seuil S est franchi dans le sens descendant. Le conducteur peut aussi augmenter l'effet de frein moteur en plaçant le sélecteur 154 en position "manuel".

Pour alimenter la chambre hydraulique 46 en vue des fonctions qui viennent d'être décrites, on peut utiliser une pression hydraulique choisie suffisamment élevée pour surmonter de manière certaine la force axiale produite en sens contraire par les masselottes 29, quelle que soit la vitesse de rotation des masselottes autour de l'axe 12.

Mais pour des raisons de sécurité et d'économie d'énergie, il est préférable de ne fournir à la chambre hydraulique 46b qu'une pression limitée à une valeur telle que la force axiale du piston 44 ne surmonte la force contraire des masselottes 29 que si la vitesse de rotation des masselottes est suffisamment faible pour que le passage au fonctionnement en réducteur n'entraîne pas de survitesse du moteur 5.

Dans la situation représentée à la figure 1, le moteur et le véhicule sont à l'arrêt, l'unité de commande 152 et l'électrovanne ne sont pas alimentées, donc l'électrovanne 69 est en position de purge de la chambre 46. Le ressort belleville 34, prenant appui sur le plateau fixe 27, pousse la cage 20 dans la position de serrage de l'embrayage 18 et de purge de la chambre 46. Le dispositif de transmission est en prise directe et permet donc au moteur 5 de jouer le rôle de frein de stationnement.

A la figure 2, la chambre 46 est alimentée et maintient le fonctionnement en réducteur, avec l'aide de la force de denture Pac, et contre la force des masselottes 29 ou du ressort 34 (le montage est tel que seule la plus grande des deux forces produites par les masselottes 29 et respectivement le ressort 34 agit). Il est également possible que la force de denture suffise à maintenir le fonctionnement en réducteur lorsque la chambre 46 est non alimentée, mais cette situation n'est pas représentée. Au contraire lorsque le moteur tourne mais que l'embrayage 86 est relâché, la force de denture Pac n'existe pas encore et le piston 44 maintient seul l'embrayage 18 desserré, contre l'action du ressort 34.

A la figure 3, la chambre 46 est non alimentée, et les masselottes 29 ont poussé la cage dans la position de serrage de l'embrayage 18 et de purge de la chambre 46. Le ressort belleville 34 est comprimé.

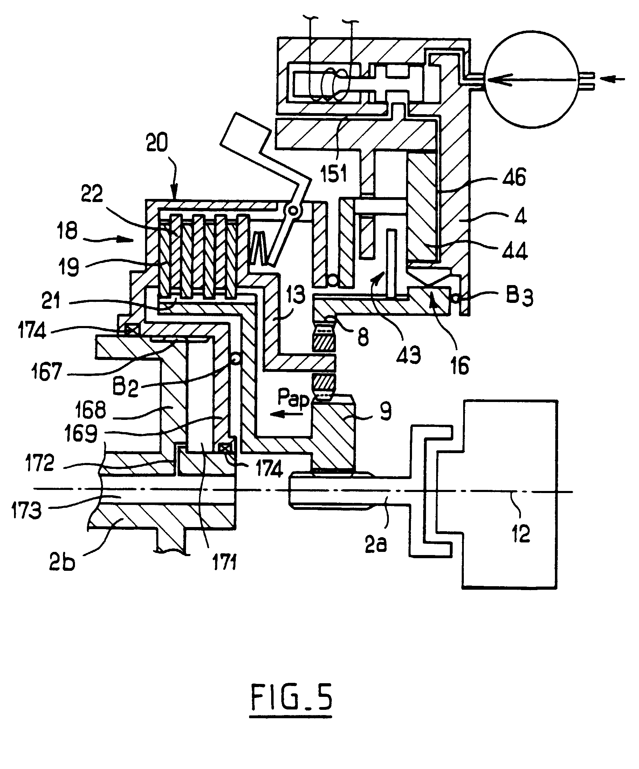

Le dispositif de transmission de la figure 5 ne sera décrit que pour ses différences par rapport à celui des figures 1 à 3.

L'utilisation d'un train épicycloïdal avec l'entrée sur la couronne et la sortie sur le porte-satellites ne permet guère de réaliser des rapports de réduction supérieurs à 1,6.

Dans certains cas, on peut avoir besoin d'une réduction beaucoup plus forte, notamment lorsqu'une transmission utilise plusieurs dispositifs à deux vitesses, et où certains rapports de transmission sont réalisés en faisant passer un dispositif en réducteur pendant qu'un autre passe en prise directe. Il faut alors qu'un des deux dispositifs ait un rapport de démultiplication environ égal à 3 lorsqu'il fonctionne en réducteur.

Pour réaliser cela, c'est maintenant la roue planétaire 9 qui est reliée de manière coulissante à l'entrée 2a du dispositif de transmission et qui est appuyée axialement contre la cage 20 par l'intermédiaire de la butée axiale B2 pour que sa force de denture Pap soit transmise à la cage 20 dans le sens du desserrage de l'embrayage 18.

Le porte-satellites 13 est toujours lié en rotation avec la sortie 24, mais pour des raisons de disposition pratique, cette liaison n'est plus directe, mais s'effectue par l'intermédiaire de la cage 20 et de cannelures axiales 167 entre la cage 20 et la sortie 2b. La cage 20 peut donc coulisser librement par rapport à la sortie 2b. Des moyens non représentés immobilisent axialement la sortie 2b et le porte-satellites 13 par rapport au carter 4.

La couronne 8 est reliée au carter 4 par la roue libre 16, et, sélectivement par le frein 43. La roue libre 16 empêche la couronne 8 de tourner en inverse. En outre la couronne 8 transmet sa poussée axiale de denture Pac au carter 4 par l'intermédiaire de la butée B3.

Les disques 19 de l'embrayage 18 sont engagées dans des cannelures 21 solidaires de la roue planétaire 9.

En outre, l'arbre de sortie 2b et la cage 20 portent chacun un flasque 168, 169 qui définissent entre eux une chambre d'amortissement annulaire 171 communiquant par un trajet hydrauliquement résistant 172 avec un conduit de lubrification 173 ménagé au centre de l'arbre de sortie 2b.

De manière non totalement représentée, un tel conduit de lubrification, alimenté par la pompe 59, peut être prévu le long de tout l'axe 12 de la transmission pour lubrifier les paliers, cannelures, butées, bagues etc. A part le passage 172, la chambre 171 est étanche, notamment grâce à deux joints 174 portés par la cage 20 et glissant sur des portées cylindriques de la sortie 2b lors des mouvements relatifs entre la cage 20 et la sortie 2b. Les cannelures 167 sont dans la chambre 171. Le montage est tel que le volume de la chambre 171 diminue lorsque la cage 20 se déplace dans le sens du desserrage de l'embrayage 18. Le desserrage de l'embrayage 18 exige donc de purger la chambre 171 par l'étroit passage 172.

Ainsi, dans l'exemple de la figure 5, non seulement la nécessité de purger la chambre 46 empêche l'embrayage 18 de se serrer brutalement, mais en outre son desserrage brutal, qui entraînerait une entrée en action brutale de la roue libre 16, est empêché par la nécessité de purger la chambre 171. Ceci est particulièrement utile dans l'exemple de la figure 5, où les vitesses de rotation varient d'un facteur 3 lorsque l'embrayage se serre et se desserre. Quand l'embrayage se serre, la chambre 171 réaspire de l'huile à travers le passage 172.

A part cela, le fonctionnement du dispositif de la figure 5 ressemble à celui des figures 1 à 4, excepté qu'en prise directe, l'embrayage 18 relie la roue planétaire 9, et non plus la couronne 8, avec la sortie 2b, et qu'en fonctionnement en réducteur, c'est la couronne 8 qui est immobile, ce qui donne un rapport de réduction d'environ 3 entre la roue planétaire 9 et le porte-satellites 13, au lieu d'1,5 entre la couronne 8 et le porte-satellites 13 dans l'exemple des figures 1 à 3.

Bien entendu, l'invention n'est pas limitée aux exemples décrits et représentés.

On pourrait également appliquer dans la chambre hydraulique 46, lorsque le conducteur désire une conduite sportive favorisant les vitesses de rotation élevées de l'arbre d'entrée 2a, une pression constante modérée pour produire, sur la cage 20, une force se soustrayant à la force de serrage produite par les masselottes. Ainsi, le couple transmissible en prise directe pour une vitesse de rotation donnée des masselottes, est moindre, et la vitesse au-dessus de laquelle la transmission fonctionnant en réducteur repasse au fonctionnement en prise directe pour un couple donné est plus grande.

Le pilotage pourrait être réalisé par une unité de commande hydraulique et non pas électronique.

Les dispositifs de transmission à deux rapports décrits peuvent être combinés pour former des transmissions plus complexes, telles par exemple que décrites dans le WO-A-92 07 206. L'invention est également applicable à des transmissions à plusieurs rapports, notamment celles également décrites dans le WO-A-92 07 206.

Dans la structure de base comprenant le train épicycloïdal 7 de la figure 1 ou de la figure 5, capable de fonctionner en prise directe grâce à un embrayage soumis à l'action de la force centrifuge et de fonctionner en réducteur de vitesse sous l'action d'un actionneur venant desserrer l'embrayage à l'encontre de l'action des masselottes, il est avantageux que la force de l'actionneur croisse avec la vitesse de rotation à laquelle les masselottes sont soumises. Lorsque l'actionneur est un vérin hydraulique 44, 46, ceci peut être réalisé en utilisant une pompe telle que 57 produisant une pression qui croît avec la vitesse de l'arbre 2b. Ainsi, lorsque le vérin entre en action pour desserrer l'embrayage, l'embrayage se desserre avec une progressivité satisfaisante car la force du vérin 44, 46 n'est que raisonnablement supérieure à celle des masselottes, quelle que soit la vitesse de rotation.

Plus généralement, cet aspect de l'invention prévoit de faire produire à l'actionneur, lorsqu'il est activé, une force qui varie de manière à être raisonnablement supérieure à la force antagoniste variable qu'il doit vaincre pour modifier l'état de l'embrayage.

## Revendications

1. Dispositif de transmission à changement de rapport automatique comprenant une combinaison de dentures interengrenées (7) et un moyen d'accouplement par friction (18), dans lequel un organe mobile de serrage (20) est attaqué par des moyens de sollicitation antagonistes (29, 34, 44, B2), l'un au moins des moyens de sollicitation antagonistes appliquant à l'organe mobile de serrage une force qui est une mesure d'un paramètre de fonctionnement pertinent pour la sélection automatique du rapport de transmission, la combinaison de dentures réalisant deux rapports de transmission différents selon que le moyens d'accouplement par friction est dans un état accouplé ou dans un état désaccouplé, caractérisé par des moyens d'amortissement (151, 171, 172) montés pour freiner certains au moins des mouvements de l'organe mobile de serrage (20) entre les états accouplé et désaccouplé du moyen d'accouplement par friction (18).

2. Dispositif selon la revendication 1, caractérisé en ce que les moyens d'amortissement (151, 171, 172) sont de type hydraulique.

3. Dispositif selon la revendication 2, caractérisé en ce que les moyens d'amortissement comprennent une chambre hydraulique à volume variable (171) définie par deux parois (168, 169) mobiles l'une par rapport à l'autre et dont l'une (169) est reliée à l'organe mobile de serrage (20).

4. Dispositif de transmission selon l'une des revendications 1 à 3, caractérisé en ce que les moyens de sollicitation antagonistes comprennent des masselottes centrifuges (29) qui sollicitent l'organe mobile de serrage (20) vers l'état accouplé.

5. Dispositif selon l'une des revendications 1 à 4, caractérisé en ce que les moyens de sollicitation antagonistes comprennent des moyens (B2) pour transmettre à l'organe mobile de serrage (20), dans le sens du désaccouplement, une force qui est fonction du couple transmis.

6. Dispositif selon l'une des revendications 1 à 4, caractérisé en ce que les moyens de sollicitation antagonistes comprennent des moyens pour transmettre à l'organe mobile de serrage (20), dans le sens du désaccouplement, une force de répulsion de denture (Pac ; Pap) à laquelle est soumise l'une des dentures engrenées (8 ; 9) lorsqu'elle est sous charge.

7. Dispositif selon la revendication 6, caractérisé en ce que le moyen d'accouplement par friction (18) est monté de façon à transmettre de la puissance à la place de ladite denture (8 ; 9) lorsqu'il est à l'état accouplé, de manière que ladite denture soit au moins partiellement déchargée lorsque le moyen d'accouplement (18) est à l'état accouplé.

8. Dispositif de transmission selon l'une des revendication 1 à 5, caractérisé en ce que le paramètre de fonctionnement est choisi pour que chaque passage du dispositif de transmission d'un rapport à l'autre fasse varier ledit paramètre de fonctionnement dans un sens tel que la force antagoniste constituant une mesure dudit paramètre varie elle-même dans le sens de la stabilisation dudit autre rapport de transmission.

9. Dispositif de transmission selon l'une des revendications 1 à 8, caractérisé en ce que la combinaison de dentures comprend un engrenage différentiel (8, 9, 11, 13) comprenant plusieurs éléments rotatifs (8, 9, 11) portant des dentures interengrenées, et le moyen d'accouplement par friction (18) est monté fonctionnellement entre deux des éléments rotatifs (8, 13 ; 9, 13) pour faire sélectivement fonctionner l'engrenage différentiel selon un premier et un deuxième des deux rapports de transmission.

10. Dispositif de transmission selon la revendication 9, caractérisé en ce qu'il comprend en outre une roue libre (16) pour empêcher un élément rotatif de réaction (9 ; 8) de l'engrenage différentiel de tourner en inverse lorsque le moyen d'accouplement par friction (18) permet une rotation relative entre lesdits deux éléments rotatifs (13, 8 ; 13, 9).

11. Dispositif selon la revendication 10, caractérisé en ce qu'il comprend des moyens d'immobilisation (43) pour sélectivement bloquer l'élément rotatif de réaction (9) indépendamment de la roue libre (16), en ce que les moyens de sollicitation antagonistes comprennent des moyens de sollicitation modulable (44, 45, 47) pour appliquer sélectivement à l'organe mobile de serrage (20) une force favorisant l'état désaccouplé du moyen d'accouplement par friction (18), et en ce qu'il est prévu des moyens (44) pour actionner les moyens d'immobilisation (43) dans le sens du blocage lorsque les moyens de sollicitation modulable (47) font passer le moyen d'accouplement par friction à l'état désaccouplé.

12. Dispositif selon la revendication 11, caractérisé en ce que les moyens d'immobilisation comprennent un frein (43) monté fonctionneliement en parallèle avec la roue libre (16).

13. Dispositif selon la revendication 11 ou 12, caractérisé en ce que les moyens de sollicitation modulable comprennent un organe actionneur (44) qui actionne directement les moyens d'immobilisation (43), et sollicite l'organe mobile de serrage (20) dans le sens du desserrage par l'intermédiaire d'une butée axiale (B4).

14. Dispositif de transmission selon l'une des revendications 1 à 10, caractérisé en ce que les moyens de sollicitation antagonistes comprennent des moyens de sollicitation modulable (44, 46, 47) pour appliquer sélectivement à l'organe mobile de serrage (20) une force favorisant l'un des états accouplé et désaccouplé du dispositif d'accouplement par friction.

15. Dispositif de transmission selon l'une des revendications 11 à 14, caractérisé en ce que les moyens de sollicitation modulable (44, 46, 47), lorsqu'ils sont activés, favorisent le fonctionnement du dispositif de transmission selon son rapport de transmission le plus court.

16. Dispositif de transmission selon l'une des revendications 11 à 15, caractérisé par des moyens (152, 153, 157) pour piloter l'activation des moyens de sollicitation modulable lorsqu'une vitesse de rotation devient inférieure à un seuil prédéterminé, et des moyens (152, 154, 156) pour commander sélectivement ladite activation indépendamment du seuil prédéterminé.

17. Dispositif selon l'une des revendications 11 à 16, caractérisé en ce que les moyens d'amortissement comprennent des moyens (151) pour freiner un organe actionneur (44) appartenant aux moyens de sollicitation modulable.

18. Dispositif selon la revendication 17, caractérisé en ce que les moyens pour appliquer une sollicitation modulable sont capables d'appliquer la sollicitation modulable dans un premier sens de mouvement de l'organe actionneur (44), et les mcyens pour freiner l'organe actionneur (44) freinent les mouvements de l'organe actionneur dans un sens opposé au premier sens.

19. Dispositif selon le revendication 18, caractérisé en ce que les moyens de sollicitation modulable comprennent un vérin hydraulique (44, 46) et les moyens pour freiner l'organe actionneur comprennent un trajet de purge hydrauliquement résistant (151) pour une chambre hydraulique (46) du vérin, de manière que l'organe actionneur (44) soit freiné par une perte de charge hydraulique lorsqu'il se déplace dans un sens correspondant à la purge de la chambre hydraulique (46).

20. Dispositif selon l'une des revendications 11 à 19, caractérisé en ce que les moyens d'amortissement comprennent des moyens (168, 169, 172) pour freiner les mouvements de l'organe mobile de serrage (20) effectués dans le sens de la sollicitation modulable.

21. Dispositif selon l'une des revendications 11 à 20, caractérisé. en ce que les moyens de sollicitation modulable, lorsqu'ils sont activés, produisent une force dont l'intensité varie, en fonction d'un paramètre de fonctionnement déterminé, dans le même sens qu'une force antagoniste produite par au moins un autre des moyens de sollicitation antagoniste et que les moyens de sollicitation modulable doivent vaincre pour changer l'état d'accouplement du moyen d'accouplement par friction.

22. Dispositif selon l'une des revendications 1 à 21, caractérisé en ce que les moyens d'amortissement comprennent une chambre hydraulique (171) à volume variable définie par deux parois (168, 169) mobiles l'une par rapport à l'autre et dont l'une (169) est reliée à l'organe mobile de serrage (20) de manière que l'un des sens de mouvement de l'organe mobile de serrage (20) provoque une purge de la chambre hydraulique (171) à travers un trajet hydrauliquement résistant (172).

23. Procédé pour piloter un dispositif de transmission comprenant une combinaison de dentures interengrenées (7) et un moyen d'accouplement par friction (18) qui fait fonctionner la combinaison de dentures selon l'un ou l'autre de deux rapports de transmission suivant que le moyen d'accouplement par friction est à l'état accouplé ou à l'état désaccouplé, procédé dans lequel on soumet un organe mobile de serrage (20) du moyen d'accouplement par friction (18) à deux forces antagonistes de base dont l'une, à chaque changement d'état du dispositif d'accouplement par friction, varie dans le sens stabilisant le nouvel état, l'un au moins des moyens de sollicitation antagonistes appliquant à l'organe mobile de serrage une force qui est une mesure d'un paramètre de fonctionnement pertinent pour la sélection automatique du rapport de transmission, caractérisé en ce que:
- on soumet en outre l'organe mobile de serrage (20) à une sollicitation modulable, de manière à sélectivement favoriser l'apparition de l'un des deux états;
- on freine au moins un sens de mouvement de l'organe de serrage.

24. Procédé selon la revendication 23, caractérisé en ce qu'on freine l'organe mobile de serrage (20) à l'encontre de ses mouvements dans le sens contraire à la sollicitation modulable.

25. Procédé selon l'une des revendications 23 ou 24, caractérisé en ce qu'on applique la sollicitation modulable pour une plage prédéterminée de variation d'un paramètre de fonctionnement du dispositif de transmission.

26. Procédé selon la revendication 24 ou 25, caractérisé en ce qu'on applique la sollicitation modulable pour une plage de vitesse prédéterminée.

27. Procédé selon la revendication 25 ou 26, caractérisé en ce qu'on règle l'une au moins (S) des limites de la plage prédéterminée.

28. Procédé selon l'une des revendications 23 à 27, caractérisé en ce qu'on applique la sollicitation modulable en sens contraire à l'une des forces antagonistes, produite par un moyen tachymétrique (29) et tendant à faire fonctionner la combinaison de dentures (7) selon le plus long des deux rapports de transmission.

29. Procédé selon la revendication 28, caractérisé en ce que le moyen tachymétrique (29) est de type centrifuge et produit une force sensiblement proportionnelle au carré de la vitesse de rotation à laquelle il est soumis.

30. Procédé selon l'une des revendication 23 à 29, caractérisé en ce qu'on applique la sollicitation modulable dans le même sens que l'une des forces antagonistes (Pac), produite par un moyen dynamométrique et tendant à faire fonctionner la combinaison de dentures (7) selon le plus court des deux rapports de transmission.

31. Procédé selon l'une des revendications 28 à 30, caractérisé en ce qu'on applique la sollicitation modulable pour une plage de basses vitesses de façon que le dispositif de transmission fonctionne selon son rapport de transmission le plus court pour cette plage.

32. Procédé selon l'une des revendications 28 à 31, appliqué à un dispositif de transmission dans lequel:
- la combinaison de dentures (7) est un engrenage différentiel qui fonctionne en prise directe lorsque le moyen d'accouplement par friction (18) est à l'état accouplé;
- une roue libre (16) empêche un organe de réaction (9 ; 8) de tourner en inverse lorsque le moyen d'accouplement par friction (18) à l'état désaccouplé;
- les moyens de sollicitation antagonistes comprennent un ressort (34) tendant à placer le moyen d'accouplement par friction (18) à l'état accouplé,
caractérisé en ce qu'on applique la sollicitation modulable dans le sens tendant à placer le moyen d'accouplement par friction (18) à l'état désaccouplé lorsque la vitesse d'une sortie (2b) du dispositif de transmission est inférieure à un certain seuil alors qu'une source de puissance (5) installée en amont du dispositif de transmission est active.

33. Procédé selon l'une des revendications 23 à 32, caractérisé en ce qu'on fait varier la sollicitation modulable dans le sens favorisant le fonctionnement de la combinaison de dentures (7) selon son rapport de transmission le plus court lorsqu'on détecte une forte demande de puissance à transmettre par le dispositif de transmission.

34. Procédé selon l'une des revendications 23 à 33, caractérisé en ce qu'on fait varier l'intensité de la sollicitation modulable, en fonction d'un paramètre de fonctionnement prédéterminé, dans le même sens qu'au moins une force antagoniste de base que la sollicitation modulable doit vaincre pour faire changer l'état d'accouplement du moyen d'accouplement par friction.

## Claims

1. An automatically ratio-changing transmission device comprising a combination of intermeshed sets of teeth (7) and a friction coupling means (18) in which a movable engaging member (20) is acted upon by antagonistic force application means (29, 34, 44, B2), at least one of the antagonistic force application means applying onto the movable engaging member a force which is a measurement of an operating parameter which is relevant for automatic selection of the transmission ratio, the combination of teeth producing two different transmission ratios according to whether the friction coupling means is in a coupled state or in an uncoupled state, characterized by shock-absorbing means (151, 171, 172) mounted for braking some at least of the movements of the movable engaging member (20) between the coupled and uncoupled states of the friction coupling means (18).

2. A transmission device according to Claim 1, characterized in that the shock-absorbing means (151, 171, 172) are of the hydraulic type.

3. A transmission device according to Claim 2, characterized in that the shock-absorbing means comprise a hydraulic chamber with variable volume (171) defined by two walls (168, 169) which are movable with respect to each other and one (169) of which is connected to the movable engaging member (20).

4. A transmission device according to one of Claims 1 to 3, characterized in that the antagonistic force application means comprise centrifugal fly-weights (29) which urge the movable engaging member (20) towards the coupled state.

5. A transmission device according to one of Claims 1 to 4, characterized in that the antagonistic force application means comprise means (B2) of transmitting to the movable engaging member (20), in the disengaging direction, a force which depends on the transmitted torque.

6. A transmission device according to one of Claims 1 to 4, characterized in that the antagonistic force application means comprise means of transmitting to the movable engaging member (20), in the disengaging direction, a repelling teeth force (Pac, Pap) to which one of the intermeshed sets of teeth (8 ; 9) are submitted when it is under load.

7. A transmission device according to Claim 6, characterized in that the friction coupling means (18) is mounted for transmitting power instead of the said teeth (8 ; 9) when it is in the coupled state, whereby the said teeth are at least partially unloaded when the coupling means (18) are in the coupled state.

8. A transmission device according to one of Claims 1 to 5, characterised in that the operating parameter is so selected that each change of the transmission ratio from one ratio to the other causes said operating parameter to vary in such a direction that the antagonistic force being a measurement of said parameter varies in the direction stabilising said other transmission ratio.

9. A -transmission device according to one of claims 1 to 8, characterized in that the combination of teeth comprises a differential gearing (8, 9, 11, 13) comprising several rotary elements (8, 9, 11) carrying intermeshed teeth, and the friction coupling means (18) is mounted operatively between two of the rotary elements (8, 13, ; 9, 13) in order selectively to make the differential gearing operate with the first or with the second of two transmission ratios.

10. A transmission device according to Claim 9, characterized in that it furthermore comprises a free wheel (16) to prevent a reaction rotary element (9 ; 8) of the differential gearing from rotating in the reverse direction when the friction coupling means (18) allows a relative rotation between said two rotary elements (13, 8 ; 13, 9).

11. A transmission device according to Claim 10, characterized in that it comprises immobilization means (43) to lock selectively the reaction rotary element (9) independently from the free wheel (16), in that the antagonistic force application means comprise controllable force application means (44, 46, 47) in order to apply selectively, to the movable engaging member (2), a force promoting the uncoupled state of the friction coupling means (18), and in that means (44) are provided to actuate the immobilization means (43) in the locking sense when the variable force application means (47) cause the friction coupling means to change to the uncoupled state.

12. A transmission device according to Claim 11, characterized in that the immobilization means comprise a brake (43) mounted operatively in parallel with the free wheel (16).

13. A transmission device according to Claim 11 or 12, characterized in that the controllable force application means comprise an actuator device (44) which actuates the immobilization means (43) directly and applies force to the movable engaging member (20) in the direction of disengagement by means of an axial thrust bearing (B4).

14. A transmission device according to one of Claims 1 to 10, characterized in that the antagonistic force application means comprise controllable force application means (44, 46, 47) to apply selectively to the movable engaging member (20) a force promoting one of the coupled or uncoupled states of the friction coupling device.

15. A transmission device according to one of Claims 11 to 14, characterized in that the controllable force application means (44, 46, 47), when they are activated, promote operation of the transmission device with its lowest transmission ratio.

16. A transmission device according to one of Claims 11 to 15, characterized by means (152, 153, 157) of controlling the activation of the controllable force application means when a speed of rotation becomes lower than a predetermined threshold, and means (152, 154, 156) of selectively controlling the said activation independently from the predetermined threshold.

17. A transmission device according to one of Claims 11 to 16, characterized in that the shock-absorbing means 5 comprise means (151) of braking an actuator member (44) which is part of the controllable force application means.

18. A transmission device according to Claim 17, characterized in that the controllable force application means are capable of applying the controllable force in a first direction of movement of the actuator member (44), and the means of braking the actuator member (44) brake the movements of the actuator member in a direction opposite to the first direction.

19. A transmission device according to Claim 18, characterized in that the controllable force application means comprise a hydraulic actuator (44, 46) and the means of braking the actuator member comprise a hydraulically resistant drain path (151) for a hydraulic chamber (46) of the actuator, whereby the actuator member (44) is braked by a loss of hydraulic pressure upon movement thereof in a direction corresponding to the draining of the hydraulic chamber (46).

20. A transmission device according to one of Claims 11 to 19, characterized in that the shock-absorbing means comprise means (168, 169, 172) for braking the movements of the movable engaging member (20) carried out in the direction of the controllable force application.

21. A transmission device according to one of Claims 11 to 20, characterized in that the controllable force application means, when they are activated, produce a force whose magnitude varies, as a function of a predetermined operating parameter, in a same direction as an antagonistic force produced by at least one other means of antagonistic force application and which the controllable force application means must overcome in order to change the coupling state of the friction coupling means.

22. A transmission device according to one of Claims 1 to 21, characterized in that the shock-absorbing means comprise a hydraulic chamber (171) having a variable volume defined by two walls (168, 169) which are movable with respect to each other and one (169) of which is connected to the movable engaging member (20) in such a way that one of the directions of movement of the movable engaging member (20) causes the hydraulic chamber (171) to be drained through a hydraulically resistant path (172).

23. A method of controlling a transmission device comprising a combination of intermeshed teeth (7) and a friction coupling means (18) which causes the combination of teeth to operate according to one or the other of two transmission ratios depending on whether the friction coupling means is in the coupled state or in the uncoupled state, a method in which a movable engaging member of the friction coupling means (18) is subjected to two basic antagonistic forces, one of which, at each change of state of the friction coupling device, varies in the sense of stabilizing the new state, at least one of the antagonistic force application means applying onto the movable engaging member a force which is a measurement of an operating parameter which is relevant for automatic selection of the transmission ratio, characterized in that :
- the movable engaging member (20) is furthermore subjected to a controllable force, thereby to selectively promote appearance of one of the two states;
- at least one direction of movement of the engaging member is braked.

24. A method according to Claim 23, characterized in that the movable engaging member (20) is braked in opposition to its movements in the direction opposite to the controllable force application.

25. A method according to one of Claims 23 or 24, characterized in that the controllable force is applied for a predetermined range of variation of an operating parameter of the transmission device.

26. A method according to Claim 24 or 25, characterized in that the controllable force is applied for a predetermined range of speed.

27. A method according to Claim 25 or 26, characterized in that at least one (S) of the limits of the predetermined range is adjusted.

28. A method according to one of Claims 23 to 27, characterized in that the controllable force is applied in a direction opposite to one of the antagonistic forces, produced by a tachometric means (29) and tending to cause the combination of teeth (7) to operate with the highest of the two transmission ratios.

29. A method according to Claim 28, characterized in that the tachometric means (29) is of the centrifugal type and produces a force substantially proportional to the square of the speed of rotation to which it is subjected.

30. A method according to one of Claims 23 to 29, characterized in that the controllable force is applied in the same direction as one of the antagonistic forces (Pac) produced by a dynamometric means and tending to cause the combination of teeth (7) to operate with the lowest of the two transmission ratios.

31. A method according to one of Claims 28 to 30, characterized in that the controllable force is applied for a range of low speeds such that the transmission device operates with its lowest transmission ratio for that range.

32. A method according to one of Claims 28 to 31, applied to a transmission device in which:
- the combination of teeth (7) is a differential gearing which operates in direct drive when the friction coupling means (18) is in the coupled state;
- a free wheel (16) prevents a reaction member (9 ; 8) from rotating in a reverse direction when the friction coupling means (18) is in the uncoupled state;
- the antagonistic force application means comprise a spring (34) tending to put the friction coupling means (18) in the coupled state,
characterized in that the controllable force is applied in the direction tending to put the friction coupling means (18) in the uncoupled state when the speed of an output shaft (2b) of the transmission device is lower than a certain threshold while a power source (5) installed upstream of the transmission device is active.

33. A method according to one of Claims 23 to 32, characterized in that the controllable force is varied in the direction promoting operation of the combination of teeth (7) with its lowest ratio upon detection of a heavy demand for power to be transmitted by the transmission device.

34. A method according to one of claims 23 to 33, characterized in that the magnitude of the controllable force is caused to vary, as a function of a predetermined operating parameter, in the same direction as at least one basic antagonistic force that the controllable force application must overcome in order to change the coupling state of the friction coupling means.

## Patentansprüche

1. Übersetzungsgetriebe mit automatischem Wechsel des Übersetzungsverhältnisses, bestehend aus einer Kombination von ineinandergreifenden Verzahnungen (7) und einem Reibungskupplungsmittel (18), in dem ein bewegliches Klemmelement (20) von Gegenbelastungsmitteln (29, 34, 44, B2) beaufschlagt wird, wobei mindestens eines der Gegenbelastungsmittel an das bewegliche Klemmelement eine Kraft anlegt, die ein Maß für einen Betriebsparameter ist, der für die automatische Auswahl des Übersetzungsverhältnisses stichhaltig ist, wobei die Kombination von Verzahnungen zwei unterschiedliche Übersetzungsverhältnisse herstellt, in Abhängigkeit davon, ob sich das Reibungskupplungsmittel in einem gekuppelten oder entkuppelten Zustand befindet, gekennzeichnet durch Dämpfungsmittel (151, 171, 172), die montiert sind, um zumindest gewisse Bewegungen des beweglichen Klemmelements (20) zwischen dem gekuppelten und dem entkuppelten Zustand des Reibungskupplungsmittels (18) zu bremsen.

2. Getriebe nach Anspruch 1, dadurch gekennzeichnet, daß die Dämpfungmittel (151, 171, 172) hydraulischer Art sind.

3. Getriebe nach Anspruch 2, dadurch gekennzeichnet, daß die Dämpfungsmittel eine Hydraulikkammer mit veränderlichem Volumen (171) umfassen, die von zwei Wandungen (168, 169) definiert wird, die zueinander beweglich sind und von denen eine (169) mit dem beweglichen Klemmelement (20) verbunden ist.

4. Getriebe nach einem der Ansprüche 1 bis 3, dadurch gekennzeichnet, daß die Gegenbelastungsmittel Fliehgewichte (29) umfassen, die das bewegliche Klemmelement (20) in den gekuppelten Zustand bringen.

5. Getriebe nach einem der Ansprüche 1 bis 4, dadurch gekennzeichnet, daß die Gegenbelastungsmittel Mittel (B2) zur Übertragung einer Kraft auf das bewegliche Klemmelement (20) in die Richtung der Entkupplung umfassen, wobei diese Kraft von dem übertragenen Moment abhängt.

6. Getriebe nach einem der Ansprüche 1 bis 4, dadurch gekennzeichnet, daß die Gegenbelastungsmittel Mittel umfassen, um auf das bewegliche Klemmelement (20) in die Richtung der Entkupplung eine Verzahnungsrückstoßkraft (Pac; Pap) zu übertragen, der eine der eingreifenden Verzahnungen (8; 9) unterworfen ist, wenn sie unter Last steht.

7. Getriebe nach Anspruch 6, dadurch gekennzeichnet, daß das Reibungskupplungsmittel (18) derart montiert ist, dass es Leistung an die Stelle dieser Zahnung (8; 9) überträgt , wenn es sich im gekuppelten Zustand befindet, so daß die Zahnung mindestens teilweise entlastet wird, wenn sich das Kupplungselement (18) im gekuppelten Zustand befindet.

8. Übersetzungsgetriebe nach einem der Ansprüche 1 bis 5, dadurch gekennzeichnet, daß der Betriebsparameter derart ausgewählt wird, daß jeder Übergang des Getriebes von einem Übersetzungsverhältnis in das andere den Betriebsparameter in eine Richtung verändert, so daß die Gegenkraft, die ein Maß für diesen Parameter darstellt, auch in die Richtung der Stabilisierung des anderen Übersetzungsverhältnisses verändert wird.

9. Übersetzungsgetriebe nach einem der Ansprüche 1 bis 8, dadurch gekennzeichnet, daß die Kombination von Verzahnungen ein Differentialgetriebe (8, 9, 11, 13) umfaßt, das mehrere drehbare Elemente (8, 9, 11) umfaßt, die ineinandergreifende Verzahnungen tragen, und daß das Reibungskupplungselement (18) funktional zwischen zwei der drehbaren Elemente (8, 13; 9, 13) montiert ist, um das Differentialgetriebe selektiv nach einem ersten oder einem zweiten der beiden Übersetzungsverhältnisse arbeiten zu lassen.

10. Übersetzungsgetriebe nach Anspruch 9, dadurch gekennzeichnet, daß es ferner einen Freilauf (16) umfaßt, um ein drehbares Reaktionselement (9; 8)des Differentialgetriebes daran zu hindern, sich in entgegengesetzte Richtung zu drehen, wenn das Reibungskupplungselement (18) eine relative Drehung zwischen den beiden drehbaren Elementen (13, 8; 13, 9) ermöglicht.

11. Getriebe nach Anspruch 10, dadurch gekennzeichnet, daß es Feststellmittel (43) umfaßt, um selektiv das drehbare Reaktionselement (9) unabhängig von dem Freilauf (16) festzustellen, daß die Gegenbelastungsmittel modulierbare Belastungsmittel(44, 45, 47) umfassen, um selektiv an das bewegliche Klemmelement (20) eine Kraft anzulegen, die den entkuppelten Zustand des Reibungskupplungselements (18) begünstigt, und daß Mittel (44) vorgesehen sind, um die Feststellmittel (43) in die Richtung der Feststellung zu betätigen, wenn die modulierbaren Belastungsmittel (47) das Reibungskupplungsmittel in den entkuppelten Zustand übergehen lassen.

12. Getriebe nach Anspruch 11, dadurch gekennzeichnet, daß die Feststellmittel eine Bremse (43) umfassen, die funktional parallel mit dem Freilauf (16) montiert ist.

13. Getriebe nach Anspruch 11 oder 12, dadurch gekennzeichnet, daß die modulierbaren Belastungsmittel ein Betätigungselement (44) umfassen, das direkt die Feststellmittel (43) betätigt und das bewegliche Klemmelement (20) in die Richtung der Lockerung mit Hilfe eines Axialanschlags (B4) belastet.

14. Übersetzungsgetriebe nach einem der Ansprüche 1 bis 10, dadurch gekennzeichnet, daß die Gegenbelastungsmittel modulierbare Belastungsmittel (44, 46, 47) umfassen, um selektiv an das bewegliche Klemmelement (20) eine Kraft anzulegen, die den gekuppelten oder den entkuppelten Zustand der Reibungskupplungs-vorrichtung begünstigt.

15. Übersetzungsgetriebe nach einem der Ansprüche 11 bis 14, dadurch gekennzeichnet, daß die modulierbaren Belastungsmittel (44, 46, 47), wenn sie aktiviert werden, den Betrieb des Übersetzungsgetriebes nach einem kürzeren Überseztungsverhältnis begünstigen.

16. Übersetzungsgetriebe nach einem der Ansprüche 11 bis 15, gekennzeichnet durch Mittel (152, 153, 157) zur Steuerung der Aktivierung der modulierbaren Belastungsmittel, wenn eine Drehgeschwindigkeit kleiner als eine vorbestimmte Schwelle wird, und durch Mittel (152, 154, 156) zur selektiven Steuerung dieser Aktivierung unabhängig von der vorbestimmten Schwelle.

17. Getriebe nach einem der Ansprüche 11 bis 16, dadurch gekennzeichnet, daß die Dämfpungsmittel Mittel (151) umfassen, um ein Betätigungselement (44), das zu den modulierbaren Belastungsmitteln gehört, zu bremsen.

18. Getriebe nach Anspruch 17, dadurch gekennzeichnet, daß die Mittel zum Anlegen einer modulierbaren Belastung in der Lage sind, die modulierbare Belastung in eine erste Bewegungsrichtung des Betätigungselements (44) anzulegen, und die Mittel zum Bremsen des Betätigungselements (44) die Bewegungen des Betätigungselements in eine zu der ersten Richtung entgegengesetzte Richtung bremsen.

19. Getriebe nach Anspruch 18, dadurch gekennzeichnet, daß die modulierbaren Belastungsmittel einen Hydraulikzylinder (44, 46) umfassen und die Mittel zum Bremsen des Betätigungselements eine einen hydraulischen Widerstand aufweisende Entleerungsbahn (151) für eine Hydraulikkammer (46) des Zylinders umfassen, so dass das Betätigungselement (44) durch einen hydraulischen Lastverlust gebremst wird, wenn es sich in eine Richtung, die der Entleerung der Hydraulikkammer (46) entspricht, verschiebt.

20. Getriebe nach einem der Ansprüche 11 bis 19, dadurch gekennzeichnet, daß die Dämpfungsmittel Mittel (168, 169, 172) zum Bremsen der Bewegungen des beweglichen Klemmelements (20), die in die Richtung der modulierbaren Belastung erfolgen, umfassen.

21. Getriebe nach einem der Ansprüche 11 bis 20, dadurch gekennzeichnet, daß die modulierbaren Belastungsmittel, wenn sie aktiviert sind, eine Kraft erzeugen, deren Stärke sich in Abhängigkeit von einem bestimmten Betriebsparameter in dieselbe Richtung wie eine Gegenkraft verändert, die von mindestens einem anderen der Gegenbelastungsmittel erzeugt wird, und die die modulierbaren Belastungsmittel überwinden müssen, um den Kupplungszustand des Reibungskupplungsmittels zu ändern.

22. Getriebe nach einem der Ansprüche 1 bis 21, dadurch gekennzeichnet, daß die Dämpfungsmittel eine Hydraulikkammer (171) mit einem veränderlichen Volumen umfassen, die von zwei Wandungen (168, 169) gebildet wird, die zueinander beweglich sind und von denen eine (169) mit dem beweglichen Klemmelement (20) derart verbunden ist, daß eine der Bewegungsrichtungen des beweglichen Klemmelements (20) eine Entleerung der Hydraulikkammer (171) über eine einen hydraulischen Widerstand aufweisende Bahn (172) bewirkt.

23. Verfahren zur Steuerung eines Übersetzungsgetriebes, bestehend aus einer Kombination von ineinandergreifenden Verzahnungen (7) und einem Reibungskupplungsmittel (18), das die Kombination von Verzahnungen nach dem einen oder anderen Übersetzungsverhältnis arbeiten läßt, in Abhängigkeit davon, ob sich das Reibungskupplungsmittel im gekuppelten oder entkuppelten Zustand befindet, Verfahren, bei dem ein begwegliches Klemmelement (20) der Reibungskupplungsvorrichtung (18) zwei Basisgegenkräften unterworfen wird, von denen eine bei jeder Zustandsänderung der Reibungskupplungsvorrichtung sich in die Richtung der Stabilisierung eines neuen Zustandes verändert, wobei mindestens eines der Gegenbelastungsmittel an das bewegliche Klemmelement eine Kraft anlegt, die ein Maß für einen Betriebsparameter ist, der für die automatische Auswahl des Übersetzungsverhältnisses stichhaltig ist, dadurch gekennzeichnet, daß:
- ferner das bewegliche Klemmelement (20) einer modulierbaren Belastung unterzogen wird, so daß selektiv das Auftreten eines der beiden Zustände begünstigt wird;
- mindestens eine Bewegungsrichtung des Klemmelements gebremst wird.

24. Verfahren nach Anspruch 23, dadurch gekennzeichnet, daß das bewegliche Klemmelement (20) gegen seine Bewegungen in die zu der modulierbaren Belastung entgegengesetzte Richtung gebremst werden.

25. Verfahren nach einem der Ansprüche 23 oder 24, dadurch gekennzeichnet, daß die modulierbare Belastung für einen vorbestimmten Bereich der Veränderung eines Betriebsparameters des Übersetzungsgetriebes angelegt wird.

26. Verfahren nach Anspruch 24 oder 25, dadurch gekennzeichnet, daß die modulierbare Belastung für einen vorbestimmten Geschwindigkeitsbereich angelegt wird.

27. Verfahren nach einem der Ansprüche 25 oder 26, dadurch gekennzeichnet, daß mindestens eine (S) der Grenzen des vorbestimmten Bereichs eingestellt wird.

28. Verfahren nach einem der Ansprüche 23 bis 27, dadurch gekennzeichnet, daß die modulierbare Belastung in die zu einer der Gegenkräfte entgegengesetzte Richtung angelegt wird, welche durch ein Tachometermittel (29) erzeugt wird und dazu neigt, die Kombination von Verzahnungen (7) nach dem längeren der beiden Übersetzungsverhältnisse arbeiten zu lassen.

29. Verfahren nach Anspruch 28, dadurch gekennzeichnet, daß das Tachometermittel (29) vom Typ Fliehmittel ist und eine im wesentlichen zum Quadrat der Drehgeschwindigkeit, der es unterliegt, proportionale Kraft erzeugt.

30. Verfahren nach einem der Ansprüche 23 bis 29, dadurch gekennzeichnet, daß die modulierbare Belastung in dieselbe Richtung wie eine der Gegenkräfte (Pac) angelegt wird, die durch ein Dynamometermittel erzeugt wird und dazu neigt, die Kombination von Verzahnungen (7) nach dem kürzeren der beiden Übersetzungsverhältnisse arbeiten zu lassen.

31. Verfahren nach einem der Ansprüche 28 bis 30, dadurch gekennzeichnet, daß die modulierbare Belastung für einen Bereich geringer Geschwindigkeiten angelegt wird, so daß das Übersetzungsgetriebe für diesen Bereich nach seinem kürzeren Übersetzungsverhältnis arbeitet.

32. Verfahren nach einem der Ansprüche 28 bis 31, verwendet für ein Übersetzungsgetriebe, bei dem:
- die Kombination von Verzahnungen (7) ein Differentialgetriebe ist, das im direkten Gang arbeitet, wenn sich das Reibungskupplungsmittel (18) im gekuppelten Zustand befindet;
- ein Freilauf (16) ein Reaktionselement (9; 8) daran hindert, sich in entgegengesetzte Richtung zu drehen, wenn sich das Reibungskupplungsmittel (18) im entkuppelten Zustand befindet;
- die Gegenbelastungsmittel eine Feder (34) umfassen, die dazu neigt, das Reibungskupplungsmittel (18) in den gekuppelten Zustand zu bringen,
dadurch gekennzeichnet, daß die modulierbare Belastung in die Richtung angelegt wird, die dazu neigt, das Reibungskupplungselement (18) in den entkuppelten Zustand zu bringen, wenn die Geschwindigkeit eines Ausgangs (2b) des Übersetzungsgetriebes kleiner als eine gewisse Schwelle ist, während eine Leistungsquelle (5), die dem Übersetzungsgetriebe vorgeschaltet ist, aktiv ist.

33. Verfahren nach einem der Ansprüche 23 bis 32, dadurch gekennzeichnet, daß die modulierbare Belastung in die Richtung verändert wird, die den Betrieb der Kombination von Verzahnungen (7) nach ihrem kürzeren Übersetzungsverhältnis begünstigen, wenn eine starke Leistungsanforderung erfaßt wird, die von dem Übersetzungsgetriebe übertragen werden soll.

34. Verfahren nach einem der Ansprüche 23 bis 33, dadurch gekennzeichnet, daß die Stärke der modulierbaren Belastung in Abhängigkeit von einem vorbestimmten Betriebsparameter in dieselbe Richtung wie mindestens eine Basisgegenkraft verändert wird, die die modulierbare Belastung überwinden muß, um den Kupplungszustand des Reibungskupplungsmittels zu ändern.
